Europäisches Patentamt

European Patent Office

Office européen des brevets

(19)

(11) EP 0 429 302 B1

(12)

# EUROPEAN PATENT SPECIFICATION

(45) Date of publication and mention
of the grant of the patent:
**24.01.1996 Bulletin 1996/04**

(51) Int Cl.6: **G01N 29/00**

(21) Application number: **90312681.1**

(22) Date of filing: **21.11.1990**

(54) **Ultrasonic testing method for detecting flaws of balls and apparatus for said method**

Ultraschallprüfverfahren zur Feststellung von Fehlstellen in Kugeln und Vorrichtung dazu

Méthode de test ultrasonore pour détecter des défauts de billes et appareil pour cela

(84) Designated Contracting States:
**DE GB SE**

(30) Priority: **21.11.1989 JP 302531/89**

(43) Date of publication of application:
**29.05.1991 Bulletin 1991/22**

(73) Proprietor: **NGK INSULATORS, LTD.**
**Nagoya City, Aichi Pref. (JP)**

(72) Inventors:
• **Fushimi, Koji**
**Gifu-City, Gifu-prefecture 500 (JP)**

• **Kawasaki, Keiji**
**Midori-ku, Nagoya city, Aichi-pref. 458 (JP)**

(74) Representative:
**Paget, Hugh Charles Edward et al**
**London WC2B 6HP (GB)**

(56) References cited:
**DE-A- 3 810 906**       **DE-A- 3 905 430**
**FR-A- 2 549 226**       **GB-A- 2 068 550**
**US-A- 3 803 904**       **US-A- 4 065 960**

Remarks:
The file contains technical information submitted
after the application was filed and not included in
this specification

**Description**

This invention relates to an ultrasonic testing method and apparatus for detecting flaws in balls for structural members, and more particularly to an ultrasonic testing method for accurate detection of minute flaws in the surface and the inside of balls for structural members, wherein at least two probes are used.

A known testing method for detecting flaws of steel materials, steel plates, forgings, etc., is the immersion-type ultrasonic testing method for detecting flaws in which water is used as a medium for transmitting ultrasonic wave.

In application of the conventional ultrasonic testing method for detecting flaws to products to be or being used under severe conditions, a focus-type probe obtained by attaching a concave resin lens to an oscillator or by forming the oscillator itself in a concave shape has been used to detect flaws several hundreds of micrometers in size, thereby achieving a higher reliability.

On the other hand, research has been carried out on the use of ceramics for bearing members and the like, which are required to have high reliability. Ceramics are brittle materials, and, especially in the case of balls for structural members such as ceramic balls for bearing which have been being developed in recent years, the presence of flaws such as pores, foreign matter and cracks in a portion of the ball might cause concentration of stress on that portion, resulting in breakage. The larger the flaws become and the nearer the flaws to the surface of the ball are, the greater becomes the effect of the flaws. Therefore, a testing method with high resolution has been desired for detection of such flaws of the ceramic products.

The present inventors previously proposed, in Japanese Patent Application Laid-Open (KOKAI) No. 63-243751 (1988) (which corresponds to U.S. Patent (5005417) and Japanese Patent Application Laid-Open (KOKAI) No. 1-219554 (1989) (which corresponds to (DE-A-3905430), an ultrasonic testing method for detecting flaws of balls in which a focus-type ultrasonic probe is used with the focus located on the surface of the ball and with the angle of incidence of ultrasonic wave set equal to the critical angle of the transverse wave, thereby detecting accurately the flaws present in the surface of the ball and the flaws present within a depth of 2 mm from the surface, and an apparatus for the method.

Though a higher detection accuracy than that in the prior art is achieved by this method, most of the incident ultrasonic wave is reflected by the surface of the ball or is converted into a surface wave and, therefore, only part of the ultrasonic wave propagates into the inside of the ball. Accordingly, in this method, the detection sensitivity for internal flaws is lower than that for surface flaws. Because detection of flaws with higher accuracy requires a finer detection pitch, this method requires a long time to perform flaw detection for the entire surface of the ball with higher accuracy.

GB-A-2068550 describes a method of rotating a ball and detecting flaws by means of two ultrasonic generators whose axes are spatially displaced and rotationally shifted so that one beam of ultrasonic waves is directed perpendicularly and the other obliquely against the ball surface.

It is accordingly an object of this invention to provide an ultrasonic testing method for detecting flaws in balls for structural members which enables detection of internal flaws of the balls with higher sensitivity and enables the flaw detection to be performed in a shorter time, without any lowering in detection accuracy, and an apparatus for the method.

According to this invention, there is provided an ultrasonic testing method for detecting flaws of a ball as set out in claim 1.

In this invention, unoverlapped flaw detecting regions means that flaw detecting areas of the probes in the outer surface and/or inside of the ball do not overlap.

According to this invention, there is also provided an ultrasonic testing apparatus as set out in claim 4.

Embodiments of the present invention will now be described with reference to the accompanying drawings, in which:-

Figure 1 is a sectional view illustrating one embodiment of an ultrasonic testing apparatus for detecting flaws according to this invention;
Figure 2 is a sectional view illustrating the positional relationship between two probes in one embodiment of this invention; and
Figures 3(a), 3(b), 4(a), 4(b), 5(a) and 5(b) are each a waveform chart obtained in testing for detecting flaws of balls according to one embodiment of this invention.

The ultrasonic testing method for detecting flaws according to this invention is carried out in a medium for transmitting ultrasonic waves, and can be carried out effectively by use of an ultrasonic testing apparatus for detecting flaws which comprises a ball holding portion for holding rotatably a ball for structural members, at least two focus-type probes for detection of flaws, and at least two probe mount portions for mounting the probes thereon so that axis of each of the probes is capable of being set eccentric relative to the center of the ball and the position of the focus of each of the probes is variable.

The at least two ultrasonic probes used in this invention for detecting flaws of balls for structural members can be disposed so that each probe for flaw detection is in charge of one of the at least two sections into which the periphery of the material to be tested, namely, the ball for structural members, is divided. In this case, the at least two probes are each arranged to swivel along the periphery of the ball, and the regions of flaw detection on and/or in the ball by the probes are so set as substantially not to overlap with each other. Thus, the probes perform flaw detection separately for the respective sections of the periphery of the ball.

With the above arrangement, it is possible to shorten the flaw detecting time even where a finer detection pitch is adopted.

The number of the probes, which may ordinarily be two, may be appropriately selected according to the testing conditions such as the size of the balls to be tested, the detection pitch, etc.

The probe used in this invention is preferably a focus-type probe in which a tip portion of the probe, namely, an acoustic lens or an oscillator has a spherical surface for providing a focus at which an ultrasonic wave is most intensified. If the probe is not of the focus-type, the ultrasonic wave is scattered in the inside of the ball, resulting in a lower detection sensitivity.

In the ultrasonic testing method for detecting flaws according to this invention, the test is carried out by disposing a first one of the plural probes so as to locate the focus thereof on the surface of the ball, and setting the center axis of this probe eccentric relative to the center of the ball, while setting the center axis of the other probe in conformity with the center of the ball to cause the ultrasonic wave from the other probe to be perpendicularly incident on the surface of the ball, and locating the focus of the other probe in the inside of the ball.

For the probe whose center axis is set eccentrically, the eccentricity is up to such a value that the angle of incidence of ultrasonic wave becomes equal to the critical angle of the ultrasonic transverse wave. The eccentricity X corresponding to the critical angle of the transverse wave is calculated from the following formula (1):

$$X = R \cdot V_L / V_B \qquad (1)$$

where $V_L$ (m/sec) is the velocity of ultrasonic transverse wave in a liquid, such as water and an oil, used as a medium for transmitting ultrasonic wave in which to dispose the ultrasonic testing apparatus for detecting flaws and $V_B$ (m/sec) is the velocity of ultrasonic longitudinal wave in a ball to be tested having a radius of curvature R (mm).

When the probe is disposed with such an eccentricity, the ultrasonic wave is transmitted along the surface of the ball, so that minute flaws present on the surface of the ball and in the vicinity of the surface can be detected accurately.

For the probe whose center axis is set in conformity with the center of the ball, thereby causing the ultrasonic wave to be perpendicularly incident on the surface of the ball, and the focus of the probe is located in the inside of the ball, it is possible to detect accurately the minute flaws, particularly the minute flaws at the focal position inside the ball.

The probes in this invention are held respectively by probe mount portions. The probe mount portions are each provided with a mechanism for swiveling along a predetermined horizontal circumference of the spherical surface of the ball. With the probe mount portions operated, the probes mounted on the portions are each swiveled along the peripheral surface of the ball, whereby the ball surface in each flaw detecting region can be tested completely by the probe in charge of the region. In this case, the swiveling range of each probe is set to be an angle of 180° around the ball, whereby the entire peripheral surface of the ball can be tested completely.

Besides, the probe mount portion is provided with a mechanism for enabling a movement of a tip portion of the probe through 180° around the ball, setting the position of the probe over the surface of the ball freely in vertical and horizontal directions, and for free setting of the spacing between the probe and the ball. The mechanism makes it possible to conform the center axis of one probe to the center of the ball, and to set the center axis of the other probe eccentric relative to the center of the ball, and to locate the focus of the first probe in the inside of the ball, and to locate the focus of the other probe on the surface of the ball.

In the testing for detecting flaws of balls for structural members according to this invention, the test is carried out by rotating the ball in a medium for transmitting ultrasonic waves. For this purpose, the ball holding portion for holding the ball thereon is provided with a mechanism for free rotation of the ball. For instance, four rollers each being circular in vertical cross section are combined to form a recessed portion on which to mount the ball. By rotating the rollers with the ball mounted on the recessed portion, the ball can be rotated. With the ball rotated vertically on a rotational axis parallel to the axis of the probe, the entire peripheral surface of the ball can be tested for flaw detection by swiveling the probe along the peripheral surface of the ball through 180° from one point to another of the rotational axis of the ball.

Furthermore, the recessed portion on which to mount the ball may be formed by combining rollers of different diameters or combining rollers differing in coefficient of friction, whereby the center of rotation of the ball may be shifted while the ball is rotated in a fixed direction or the ball may be rotated spirally. In such cases, the entire surface of the ball can be tested without swiveling the probes.

As mentioned above, the probe mount portions and the ball rotating mechanism enable swiveling of the probes along the peripheral surface of the ball, rotation of the ball itself, shifting of the rotational axis of the ball, and spiral rotation of the ball, whereby the entire surface of the ball and the inside of the ball can be completely tested for detecting flaws.

The balls for structural members in this invention may be those balls which are used for bearing members, wearresistant members or sliding members. Though the balls can be made both of a ceramic and of a metal, ceramic balls for structural members are particularly suitable for use as the object to be tested according to this invention because the accurate detection of minute flaws of such ceramic balls has an extremely great effect on the reliability of the balls.

Furthermore, by the ultrasonic testing method and apparatus for detecting flaws of balls for structural members according to this invention, it is possible not only to detect minute flaws on the surface of the balls and in the vicinity of the surface but also to achieve speedy, accurate and precise detection of minute flaws in the inside of the balls, which is necessary for quality control of the balls, thereby obtaining highly reliable balls for structural members.

EXAMPLES

Some embodiments of this invention will now be explained in detail below while referring to the drawings; it is to be understood, however, that the invention is not limited to the following embodiments.

**Example 1**

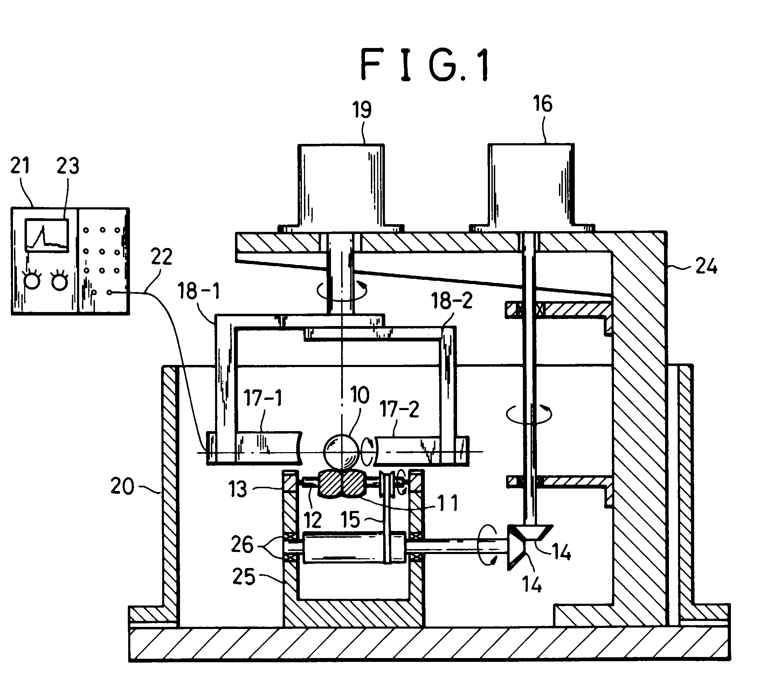

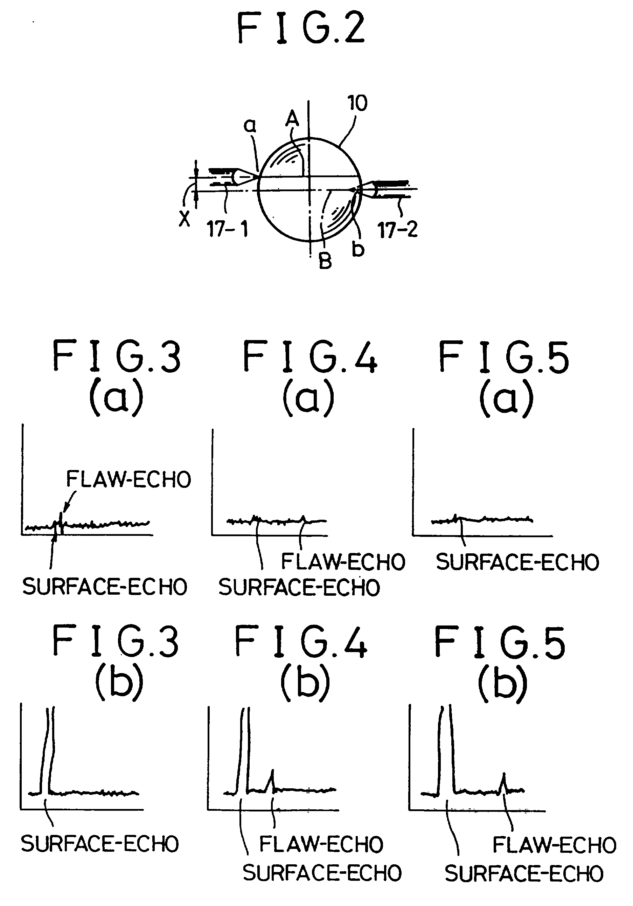

Figure 1 is a sectional view illustrating one embodiment of an ultrasonic testing apparatus for detecting flaws according to this invention, and Figure 2 is a sectional view illustrating the positional relationship between two probes according to an embodiment of this invention.

Referring to Figure 1, a ball mount portion having a recessed shape was formed by two pairs of rollers 11 supported by shafts 12, each of the rollers having a spherical surface portion with a diameter of 10 mm, parts cut away, and each pair of rollers being joined at the cut sections. The shafts 12, rollers 11 and bearings 13 for supporting the shafts 12 were all formed from zirconia.

The zirconia used for forming the shafts and the like had a Knoop hardness of 1200 kg/mm$^2$. The tips of the shafts and the bearings were finished to have a surface roughness $R_{max}$ of not more than 2 µm.

An ultrasonic testing apparatus for detecting flaws of balls for structural members comprising a ball driving motor 16 for rotating the ball driving rollers 11 through a bevel gearing 14 and a driving belt 15, probe mount arms 18-1 and 18-2 for fixing probes 17-1 and 17-2, respectively, and a probe driving motor 19 for swiveling the probes 17-1 and 17-2 around a ceramic ball 10 through the probe mount arms 18-1 and 18-2 was disposed in a water tank 20, which was filled with an appropriate quantity of water.

In Figure 1, there are also shown a frame 24 for supporting the ball driving motor 16 and the probe driving motor 19, a frame 25 for supporting the ball driving rollers 11, and a structural member 26.

In Figure 2, the probe 17-1 is disposed with an upward eccentricity X, and the focus thereof is positioned at a point $\underline{a}$ on the surface of the ball 10, whereas the probe 17-2 is so placed that the center axis thereof conforms with the center of the ball 10 and the focus thereof is positioned at a point $\underline{b}$ inside the ball 10. In this case, while the ceramic ball 10 is rotated, the probes 17-1 and 17-2, whose axes are anti-parallel as shown in Fig. 2, are swiveled through 180° respectively along lines A and B on the peripheral surface of the ball 10, thereby performing flaw detection over the entire surface of the ball 10.

In the ultrasonic testing apparatus for detecting flaws set as above, a silicon nitride ball 10 with 10 mm diameter was placed on the recessed form portion formed by the rollers 11. The probe 17-1 for ultrasonic flaw detection with a test frequency of 50 MHz, an oscillator diameter of 5 mm and a focal length of 10 mm was attached to the probe mount arm 18-1 at an arbitrary position, and the probe 17-2 for ultrasonic flaw detection with a test frequency of 50 MHz, an oscillator diameter of 5 mm and a focal length of 20 mm was attached to the probe mount arm 18-2 at an arbitrary position. Further, the probes 17-1 and 17-2 were connected to an ultrasonic flaw detector 21 by a cable 22.

Next, the ultrasonic flaw detector 21 was switched ON, and with observing a CRT 23, the probes 17-1 and 17-2 were moved horizontally, vertically, and back and forth in an adjusting manner so as to find positions at which the reflected waves (S waves) from the ball surface reach their maximum values, and the probes were again fixed in those positions. Further, the probe 17-1 was adjusted to an upward eccentricity of 1.3 mm, which was calculated according to the above-mentioned formula (1) from the velocity of ultrasonic longitudinal wave in water of 1500 m/sec and the velocity of ultrasonic transverse wave in the ball of 5800 m/sec. In addition, the probe 17-2 was moved by 6 mm toward the ball so as to locate the focus at a depth of 2 mm from the surface of the ball 10.

Subsequently, the ball driving motor 16 was operated to rotate the ball 10 at a rate of 300 rpm, and the probes 17-1 and 17-2 were swiveled at a rate of 5 rpm.

In the manner as mentioned above, ten silicon nitride balls, Nos. 1 to 10, were tested to detect flaws. As a result, flaw echoes were observed for three of the balls, i.e., ball Nos. 3, 6 and 7. The detection waveforms in which the flaw echo was observed are shown in Figures 3, 4 and 5, respectively.

Figure 3 show flaw detection test waveform charts for ball No. 3, in which Figure 3(a) is a test waveform chart obtained through the probe 17-1, and Figure 3(b) through the probe 17-2. For the ball No. 3, the flaw echo was detected only through the probe 17-1, indicating that the flaw was present only on the ball surface. Upon microscopic observation, a pore flaw 45 µm in size was recognized on the surface of the ball.

Figure 4 show flaw detection test waveform charts for ball No. 6, in which Figure 4(a) is a test waveform chart obtained through the probe 17-1, and Figure 4(b) through the probe 17-2. For the ball No. 6, the flaw echo was detected by both the probes 17-1 and 17-2. The waveform chart in Figure 4(b) obtained through the probe 17-2 indicates the presence of a flaw at a depth of 2 mm from the surface of the ball. On the other hand, the waveform chart in Figure 4(a) obtained through the probe 17-1 shows an echo, considered to be coming from the same flaw as above, at a distance of 2.5 mm from the ball surface and with an echo height of 1/3 times that in Figure 4(b).

Figures show flaw detection test waveform charts for ball No. 7, in which Figure 5(a) is a test waveform obtained through the probe 17-1, and Figure 5(b) through the probe 17-2. For the ball No. 7, the flaw echo was detected only through the probe 17-2, indicating the presence of a flaw at a depth of 2.8 mm from the ball surface.

The portions for which the flaw echo was recognized of ball Nos. 6 and 7 were ground and observed, to confirm the presence of pore flaws 65 and 60 µm in size, respectively.

As seen clearly from the above results, particularly the flaw echo from the flaw at a depth of 2 mm, as in the case of ball No. 6, appears greater in height on the waveform obtained by perpendicular beam testing through the probe 17-2 than on the waveform obtained by angle beam testing through the probe 17-1. In addition, the perpendicular beam testing gives a higher detection sensitivity, and makes it possible to specify the depth at which the flaw is present. Also, as seen from the detection results for ball No. 7, a flaw at a depth of more than 2 mm, even if as large as 100 µm or more in size, cannot be detected by the angle beam testing; however, such a flaw can be detected easily by the perpendicular beam testing. Thus, the ultrasonic testing method and apparatus for detecting flaws of balls according to this invention ensures a high degree of quality of the balls tested.

## Claims

1. An ultrasonic testing method for detecting flaws of a ball comprising: rotating a ball (10) to be tested in a medium for transmitting ultrasonic waves, providing two probes (17-1, 17-2) which are arranged so that their flaw-detecting regions do not overlap each other on and/or in the ball, and detecting flaws of the ball by ultrasonic waves from the probes characterised in that the said two probes (17-1, 17-2) are focus-type probes oriented substantially anti-parallel to each other and one of the said probes is disposed eccentrically relative to the center of the ball so that the angle of incidence of the axis of its ultrasonic waves at the surface of the ball equals the critical angle of the ultrasonic transverse waves and its focus is on the surface of the ball, and the other of the said probes is disposed so that its ultrasonic waves are perpendicularly incident on the surface of the ball and its focus is inside the ball.

2. A method according to claim 1, wherein the center axes of the probes are parallel to the rotational axis of the ball, and each of the probes swivels along the periphery of the ball through a predetermined angle with respect to the rotational axis.

3. A method according to claims 1 or 2 wherein the ball is made of ceramic.

4. An ultrasonic testing apparatus for detecting flaws of balls which comprises: a ball holding means (11) for holding the ball rotatably; two probes (17-1, 17-2) for detection of flaws; and probe mount means (18-1, 18-2) for mounting the probes thereon, characterised in that the probes (17-1, 17-2) are focus-type probes oriented substantially anti-parallel to each other and the probe mount means (18-1, 18-2) are arranged so that the axis of one of the probes is eccentric relative to the center of the ball and the axis of the other of the probes is aligned with a radial axis of the ball and the position of the focus of each of the probes is variable.

5. An apparatus according to claim 4, wherein the probe mount means (18-1, 18-2) are arranged to be swiveled along a predetermined horizontal circumference of the peripheral surface of the ball held on the ball holding means.

6. An apparatus according to claim 4 or claim 5, wherein the ball holding means (11) comprises a combination of a plurality of rollers.

7. An apparatus according to any one of claims 4 to 6 wherein said ball holding means (11) and said probes (17-1, 17-2) are disposed in a medium for transmitting ultrasonic waves.

## Patentansprüche

1. Ultraschall-Testverfahren zum Ermitteln von Fehlern bzw. Rissen einer Kugel, umfassend: das Drehen einer zu testenden Kugel (10) in einem Medium zum Übertragen von Ultraschallwellen, das Bereitstellen von zwei Sonden (17-1, 17-2), die so angeordnet sind, daß ihre Fehlerermittlungsbereiche einander auf und/oder in der Kugel nicht überschneiden bzw. überlappen, und das Ermitteln von Fehlern der Kugel durch Ultraschallwellen aus den Sonden, dadurch gekennzeichnet, daß die beiden Sonden (17-1, 17-2) Sonden vom Fokustyp sind, die im wesentlichen anti-parallel zueinander ausgerichtet sind, und eine der Sonden exzentrisch bezogen auf den Mittelpunkt der Kugel angeordnet ist, sodaß der Einfallswinkel der Achse ihrer Ultraschallwellen an der Oberfläche der Kugel dem kritischen Winkel der Ultraschallquerwellen entspricht bzw. gleichkommt und ihr Brennpunkt auf der Oberfläche der Kugel liegt, und die andere der Sonden so angeordnet ist, daß ihre Ultraschallwellen senkrecht auf die Oberfläche der Kugel auffallen und ihr Brennpunkt im Inneren der Kugel liegt.

**2.** Verfahren nach Anspruch 1, worin die Mittelachsen der Sonden parallel zur Rotationsachse der Kugel verlaufen und jede der Sonden entlang der Peripherie der Kugel um einen vorbestimmten Winkel bezogen auf die Rotationsachse schwenkt.

**3.** Verfahren nach Anspruch 1 oder 2, worin die Kugel aus Keramik besteht.

**4.** Ultraschalltestvorrichtung zum Ermitteln von Fehlern bzw. Rissen von Kugeln, welche umfaßt: eine Kugelhalteeinrichtung (11) zum drehbaren Halten der Kugel ; zwei Sonden (17-1, 17-2) zum Ermitteln von Fehlern; und Sondenmontagemittel (18-1, 18-2) zum Montieren der Sonden darauf, dadurch gekennzeichnet, daß die Sonden (17-1, 17-2) Sonden vom Fokustyp sind, die im wesentlichen anti-parallel zueinander ausgerichtet sind und die Sondenmontagemittel (18-1, 18-2) so angeordnet sind, daß die Achse einer der Sonden relativ zum Mittelpunkt der Kugel exzentrisch ist und die Achse der anderen Sonde mit einer radialen Achse der Kugel ausgerichtet ist und die Position des Brennpunkts einer jeden der Sonden variabel ist.

**5.** Vorrichtung nach Anspruch 4, worin die Sondenmontagemittel (18-1, 18-2) so montiert sind, daß sie entlang eines vorbestimmten horizontalen Umfangs der peripheren Oberfläche der auf der Kugelhalteeinrichtung gehaltenen Kugel schwenkbar sind.

**6.** Vorrichtung nach Anspruch 4 oder 5, worin die Kugelhalteeinrichtung (11) eine Kombination aus einer Vielzahl von Rollen umfaßt.

**7.** Vorrichtung nach einem der Ansprüche 4 bis 6, worin die Kugelhalteeinrichtung (11) und die Sonden (17-1, 17-2) in einem Medium zur Übertragung von Ultraschallwellen angeordnet sind.

**Revendications**

**1.** Méthode de test ultrasonore pour détecter des défauts dans une bille consistant à : faire tourner une bille (10) à tester dans un milieu pour transmettre les ondes ultrasonores, prévoir deux sondes (17-1, 17-2) qui sont agencées de manière que leurs régions de détection des défauts ne se recouvrent pas sur et/ou dans la bille et détecter les défauts de la bille par des ondes ultrasonores provenant des sondes caractérisée en ce que lesdites deux sondes (17-1, 17-2) sont des sondes du type à foyer qui sont orientées sensiblement anti-parallèlement l'une à l'autre et au moins l'une desdites sondes est disposée excentriquement relativement au centre de la bille de manière que l'angle d'incidence de l'axe de ses ondes ultrasonores à la surface de la bille soit égal à l'angle critique des ondes ultrasonores transversales et que son foyer soit sur la surface de la bille et l'autre desdites sondes est disposée de manière que ses ondes ultrasonores soient perpendiculairement incidentes sur la surface de la bille et que son foyer soit à l'intérieur de la bille.

**2.** Méthode selon la revendication 1 où les axes centraux des sondes sont parallèles à l'axe de rotation de la bille et chacune des sondes pivote le long de la périphérie de la bille sur un angle prédéterminé par rapport à l'axe de rotation.

**3.** Méthode selon la revendication 1 ou 2 où la bille est faite en céramique.

**4.** Appareil de test ultrasonore pour détecter des défauts dans des billes qui comprend : un moyen de support d'une bille (11) pour soutenir la bille rotative ; deux sondes (17-1, 17-2) pour détecter les défauts ; et des moyens de montage des sondes (18-1, 18-2) pour y monter les sondes, caractérisé en ce que les sondes (17-1, 17-2) sont des sondes du type à foyer orientées sensiblement anti-parallèlement l'une à l'autre et les moyens (18-1, 18-2) de montage des sondes sont agencés de manière que l'axe de l'une des sondes soit excentrique relativement au centre de la bille et que l'axe de l'autre des sondes soit aligné avec un axe radial de la bille et la position du foyer de chacune des sondes est variable.

**5.** Appareil selon la revendication 4 où les moyens de montage des sondes (18-1, 18-2) sont agencés pour pivoter le long d'une circonférence horizontale prédéterminée de la surface périphérique de la bille maintenue sur le moyen de support de la bille.

**6.** Appareil selon la revendication 4 ou la revendication 5 où le moyen (11) de support de la bille comprend une association d'un certain nombre de rouleaux.

**7.** Appareil selon l'une des revendications 4 à 6 où ledit moyen de support de la bille (11) et lesdites sondes (17-1, 17-2) sont disposés dans un milieu transmettant les ondes ultrasonores.

# FIG.1

EP 0 429 302 B1

# F I G.2

# F I G.3 (a)

FLAW-ECHO

SURFACE-ECHO

# F I G.4 (a)

FLAW-ECHO
SURFACE-ECHO

# F I G.5 (a)

SURFACE-ECHO

# F I G.3 (b)

SURFACE-ECHO

# F I G.4 (b)

FLAW-ECHO
SURFACE-ECHO

# F I G.5 (b)

FLAW-ECHO
SURFACE-ECHO